# EUROPÄISCHE PATENTSCHRIFT

(11) **EP 3 807 915 B1**
(45) Veröffentlichungstag und Bekanntmachung des Hinweises auf die Patenterteilung: **09.09.2026**
(21) Anmeldenummer: 19745985.2
(22) Anmeldetag: 09.07.2019
(51) Int. Cl.: H01H 3/46, H01H 33/42

(54) **SCHALTVORRICHTUNG MIT MEHREREN DOPPELSCHALTVORRICHTUNGEN**
SWITCHING DEVICE WITH MULTIPLE DOUBLE SWITCHING DEVICES
DISPOSITIF DE COMMUTATION AVEC PLUSIEURS DISPOSITIFS DE COMMUTATION DOUBLES

(30) Priorität: 07.08.2018 DE 102018213222
(43) Veröffentlichungstag der Anmeldung: 21.04.2021
(73) Patentinhaber: Siemens Energy Global GmbH & Co. KG, 81739 München (DE)
(72) Erfinder: JÄNICKE, Lutz-Rüdiger, 15831 Mahlow (DE); HÜBNER, Sebastian, 10119 Berlin (DE); NOWAKOWSKI, Andrzej, 13407 Berlin (DE)
(86) Internationale Anmeldenummer: PCT/EP2019/068330
(87) Internationale Veröffentlichungsnummer: WO 2020/030361

(56) Entgegenhaltungen:
- CN-B- 104 465 203
- DE-A1- 2 204 656
- DE-A1- 3 311 706
- DE-U- 1 907 869
- FR-A- 1 569 697
- FR-A1- 2 272 475
- US-A- 3 532 843
- US-A- 3 676 621

## Beschreibung

Die Erfindung betrifft eine Schaltvorrichtung mit mehreren Doppelschaltvorrichtungen, wie in Anspruch 1 definiert.

Insbesondere betrifft die Erfindung Schaltvorrichtungen für hohe Spannungen und Ströme, wie Schaltvorrichtungen mit Leistungsschaltern, Umgehungsschaltern für Wechselstrom, die auch als Wechselstrom-Bypass-Schalter bezeichnet werden, Umgehungsschaltern für Gleichstrom, die auch als Gleichstrom-Bypass-Schalter bezeichnet werden, oder Kommutierungsschaltern für Gleichstrom. Die Anforderungen an die Komponenten einer derartigen Schaltvorrichtung steigen mit den Strömen und Spannungen, für die die Schaltvorrichtung ausgelegt werden muss. Um die Kosten für die einzelnen Komponenten zu senken oder mit verfügbaren Komponenten überhaupt Schaltvorrichtungen für sehr hohe Ströme und Spannungen zu fertigen, werden die Schaltvorrichtungen häufig mit mehreren Schalteinheiten versehen, die miteinander elektrisch verschaltet sind und bei Schaltvorgängen zusammenwirken. Die Doppelschaltvorrichtungen umfassen zwei Schalteinheiten mit Schaltstangen zum Öffnen und Schließen eines Strompfades, wobei die Schaltstangen über eine Antriebsstange angetrieben werden und eine Doppelschaltvorrichtung eine Getriebeeinheit aufweist, wie aus der US 3 532 843 A und der US 3 676 621 A bekannt ist, die die Antriebsstange an die Schaltstangen der Schalteinheiten koppelt, um die Schaltbewegungen der Schaltstangen zu koordinieren. Die Erfindung betrifft Schaltvorrichtungen mit mehreren derartigen Doppelschaltvorrichtungen, die gemeinsam angetrieben werden.

Der Erfindung liegt die Aufgabe zugrunde, eine verbesserte Schaltvorrichtung mit mehreren Doppelschaltvorrichtungen anzugeben.

Die Aufgabe wird erfindungsgemäß durch eine Schaltvorrichtung mit den Merkmalen des Anspruchs 1 gelöst.

Vorteilhafte Ausgestaltungen der Erfindung sind Gegenstand der Unteransprüche.

Eine Getriebeeinheit ist für eine Doppelschaltvorrichtung ausgebildet, die zwei sich entlang einer Längsachse der Doppelschaltvorrichtung erstreckende Schalteinheiten zum Öffnen und Schließen eines Strompfades aufweist. Die Getriebeeinheit umfasst ein Getriebegehäuse mit zwei sich gegenüberliegenden ersten Gehäuseöffnungen, die zueinander spiegelsymmetrisch bezüglich einer ersten Mittelebene angeordnet sind, und zwei sich gegenüberliegenden zweiten Gehäuseöffnungen, die zueinander spiegelsymmetrisch bezüglich einer zu der ersten Mittelebene orthogonalen zweiten Mittelebene angeordnet sind. Jede erste Gehäuseöffnung ist zur Einführung einer Schaltstange aus einer Schalteinheit in das Getriebegehäuse ausgebildet und jede zweite Gehäuseöffnung ist zur Einführung einer Antriebsstange in das Getriebegehäuse ausgebildet. Ferner weist die Getriebeeinheit eine in dem Getriebegehäuse angeordnete Umlenkanordnung zur Kopplung der Schaltstangen an die Antriebsstange auf. Die Umlenkanordnung umfasst ein erstes Koppelgelenk, durch das die Umlenkanordnung an die Antriebsstange koppelbar ist, und zwei zweite Koppelgelenke, durch die die Umlenkanordnung jeweils an eine Schaltstange koppelbar ist. Das erste Koppelgelenk ist in der ersten Mittelebene orthogonal zu der zweiten Mittelebene zwischen zwei Endlagen, die gleich weit von der zweiten Mittelebene entfernt sind, bewegbar.

Die Erfindung ermöglicht die Anordnung der Getriebeeinheit zwischen den Schalteinheiten der Doppelschaltvorrichtung in zwei voneinander verschiedenen Einbaulagen bei sonst gleicher Ausführung und Anordnung der Schalteinheiten und der Antriebsstange. In einer ersten Einbaulage ist die Getriebeeinheit um 180 Grad um die Längsachse der Doppelschaltvorrichtung gegenüber der zweiten Einbaulage gedreht. Dies wird ermöglicht durch die bezüglich der ersten Mittelebene zueinander spiegelsymmetrische Anordnung der ersten Gehäuseöffnungen und die bezüglich der zweiten Mittelebene zueinander spiegelsymmetrische Anordnung der zweiten Gehäuseöffnungen sowie die gleichen Entfernungen der Endlagen des ersten Koppelgelenks von der zweiten Mittelebene. Da die Umlenkanordnung der Getriebeeinheit in der einen Einbaulage um 180 Grad gegenüber der anderen Einbaulage gedreht ist, verursachen gleiche Bewegungen der Antriebsstange in den beiden Einbaulagen einander entgegengesetzte Schaltbewegungen der einzelnen Schaltstangen. Beispielsweise wird der Strompfad in einer ersten Einbaulage durch eine Zugbewegung der Antriebsstange geschlossen, wohingegen diese Zugbewegung in der zweiten Einbaulage den Strompfad öffnet. Entsprechend wird der Strompfad in der ersten Einbaulage durch eine der Zugbewegung entgegen gerichtete Schubbewegung der Antriebsstange geöffnet, wohingegen diese Schubbewegung in der zweiten Einbaulage den Strompfad schließt. Da eine Zugbewegung der Antriebsstange aufgrund der Elastizitätseigenschaften der Antriebsstange mit höherer Geschwindigkeit durchgeführt werden kann als eine Schubbewegung, können in den beiden Einbaulagen voneinander verschiedene Einschaltgeschwindigkeiten der Doppelschaltvorrichtung realisiert werden, beziehungsweise die Einschaltgeschwindigkeit kann durch Wechsel der Einbaulage verändert werden. Dies erweitert vorteilhaft die Anwendungsmöglichkeiten der Getriebeeinheit.

Bei einer Ausgestaltung der Getriebeeinheit ist jede erste Gehäuseöffnung spiegelsymmetrisch bezüglich der zweiten Mittelebene. Dadurch haben die ersten Gehäuseöffnungen in beiden Einbaulagen dieselbe Gestalt, wodurch die flexible Anordnung der Getriebeeinheit in den beiden Einbaulagen erleichtert wird.

Bei einer weiteren Ausgestaltung der Getriebeeinheit weist das Getriebegehäuse zwei erste Getriebegehäuseflansche auf, die jeweils eine erste Gehäuseöffnung umgeben. Insbesondere können die beiden ersten Getriebegehäuseflansche zueinander spiegelsymmetrisch bezüglich der ersten Mittelebene ausgebildet sein. Ferner kann jeder erste Getriebegehäuseflansch spiegelsymmetrisch bezüglich der zweiten Mittelebene ausgebildet sein. Diese Ausgestaltungen der Getriebeeinheit ermöglichen vorteilhaft eine einfache Verbindung der Getriebeeinheit mit den Schalteinheiten durch Flanschverbindungen.

Bei einer weiteren Ausgestaltung der Getriebeeinheit ist jede zweite Gehäuseöffnung spiegelsymmetrisch bezüglich der ersten Mittelebene. Bei einer weiteren Ausgestaltung der erfindungsgemäßen Getriebeeinheit weist das Getriebegehäuse zwei zweite Getriebegehäuseflansche auf, die jeweils eine zweite Gehäuseöffnung umgeben. Insbesondere können die beiden zweiten Getriebegehäuseflansche zueinander spiegelsymmetrisch bezüglich der zweiten Mittelebene ausgebildet sind. Ferner kann jeder zweite Getriebegehäuseflansch spiegelsymmetrisch bezüglich der ersten Mittelebene ausgebildet sein. Diese Ausgestaltungen der Getriebeeinheit ermöglichen vorteilhaft eine Stapelung mehrerer Getriebeeinheiten durch Verbinden je zweier zweiter Getriebegehäuseflansche voneinander verschiedener Getriebeeinheiten. Dadurch können mehrere Doppelschaltvorrichtungen übereinander angeordnet werden. Die genannten symmetrischen Anordnungen und Ausbildungen der zweiten Gehäuseöffnungen und der zweiten Getriebegehäuseflansche erleichtern das Verbinden der Getriebeeinheiten und ermöglichen den Antrieb der Schalteinheiten mehrerer Doppelschaltvorrichtungen durch eine gemeinsame Antriebsstange, die durch die Getriebegehäuse der Getriebeeinheiten der Doppelschaltvorrichtungen geführt ist.

Bei einer weiteren Ausgestaltung der Getriebeeinheit weist die Umlenkanordnung zwei Winkelhebel auf, wobei jeder Winkelhebel um eine Drehachse drehbar an dem Getriebegehäuse gelagert ist und einen ersten Hebelarm, der über ein drittes Koppelgelenk an ein mit dem ersten Koppelgelenk verbundenes Verbindungselement gekoppelt ist, und einen zweiten Hebelarm, an dem ein zweites Koppelgelenk angeordnet ist, aufweist. Diese Ausgestaltung der Umlenkanordnung realisiert die Kopplung der Schaltstangen an die Antriebsstange mit relativ einfachen, kostengünstigen und wartungsarmen Komponenten.

Eine Doppelschaltvorrichtung umfasst zwei sich entlang einer Längsachse der Doppelschaltvorrichtung erstreckende Schalteinheiten, die zum Öffnen und Schließen eines Strompfades jeweils eine Schaltstange aufweisen, eine zwischen den beiden Schalteinheiten angeordnete Getriebeeinheit und eine Antriebsstange, die sich orthogonal zu der zweiten Mittelebene der Getriebeeinheit durch eine zweite Gehäuseöffnung in das Getriebegehäuse der Getriebeeinheit erstreckt. Die Umlenkanordnung der Getriebeeinheit ist durch das erste Koppelgelenk an die Antriebsstange und durch die zweiten Koppelgelenke an die Schaltstangen gekoppelt. Die Vorteile einer derartigen Doppelschaltvorrichtung entsprechen den oben bereits genannten Vorteilen der besagten Getriebeeinheit und werden daher hier nicht noch einmal aufgeführt.

Die erfindungsgemäße Schaltvorrichtung umfasst mehrere Doppelschaltvorrichtungen, gemäß Anspruch 1.

Bei der erfindungsgemäßen Schaltvorrichtung mit mehreren Doppelschaltvorrichtungen sind die zweiten Mittelebenen aller Getriebeeinheiten zueinander parallel und die Doppelschaltvorrichtungen weisen eine gemeinsame Antriebsstange auf, die durch die ersten Koppelgelenke an die Umlenkanordnungen der Getriebeeinheiten aller Doppelschaltvorrichtungen gekoppelt ist. Dabei können die ersten Mittelebenen der Getriebeeinheiten wenigstens zweier Doppelschaltvorrichtungen zusammenfallen oder einander schneiden. Ferner sind die Getriebeeinheiten zweier Doppelschaltvorrichtungen identisch ausgebildet, wobei die Getriebeeinheit einer dieser Doppelschaltvorrichtungen gegenüber der Getriebeeinheit der anderen Doppelschaltvorrichtung um 180 Grad um die Längsachse der Doppelschaltvorrichtung gedreht zwischen den Schalteinheiten der Doppelschaltvorrichtung angeordnet ist. Derartige Schaltvorrichtungen ermöglichen den Antrieb mehrerer Doppelschaltvorrichtungen durch eine gemeinsame Antriebsstange. Dadurch können beispielsweise miteinander elektrisch verschaltete Doppelschaltvorrichtungen gemeinsam angetrieben werden. Die Kopplung von Doppelschaltvorrichtungen, deren Getriebeeinheiten in voneinander verschiedenen Einbaulagen angeordnet sind, kann beispielsweise genutzt werden, um Doppelschaltvorrichtungen mit voneinander verschiedenen Funktionen zu koppeln, die voneinander verschiedene Schaltgeschwindigkeiten und Schaltrichtungen erfordern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Seitenansicht einer Doppelschaltvorrichtung,
- FIG 2: eine erste Doppelschaltvorrichtung im Bereich einer Getriebeeinheit mit einem geschnitten dargestellten Getriebegehäuse,
- FIG 3: eine alternative Doppelschaltvorrichtung mit einem geschnitten dargestellten Getriebegehäuse,
- FIG 4: ein Ausführungsbeispiel einer erfindungsgemäßen Schaltvorrichtung mit zwei Doppelschaltvorrichtungen mit jeweils einer Getriebeeinheit, deren Getriebegehäuse geschnitten dargestellt ist,
- FIG 5: ein zweites, alternatives Ausführungsbeispiel einer Schaltvorrichtung mit zwei Doppelschaltvorrichtungen.

Einander entsprechende Teile sind in den Figuren mit denselben Bezugszeichen versehen.

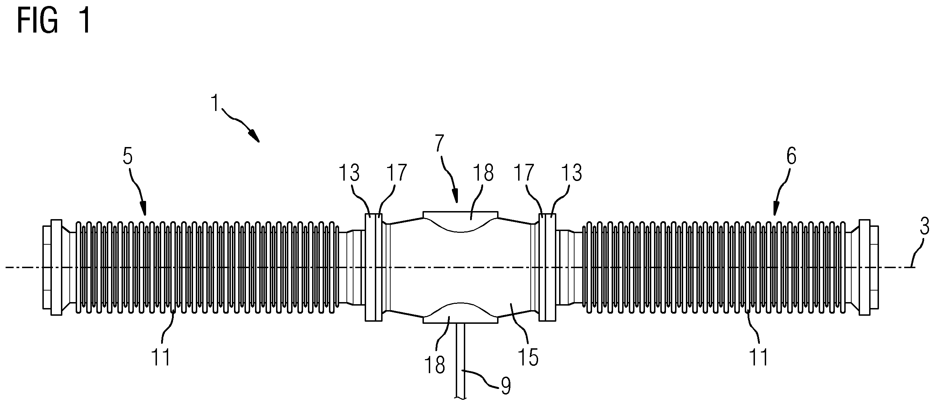

Figur 1 zeigt eine Seitenansicht einer Doppelschaltvorrichtung 1. Die Doppelschaltvorrichtung 1 weist zwei sich entlang einer Längsachse 3 der Doppelschaltvorrichtung 1 erstreckende Schalteinheiten 5, 6 zum Öffnen und Schließen eines Strompfades, eine zwischen den Schalteinheiten 5, 6 angeordnete Getriebeeinheit 7 und eine Antriebsstange 9 auf.

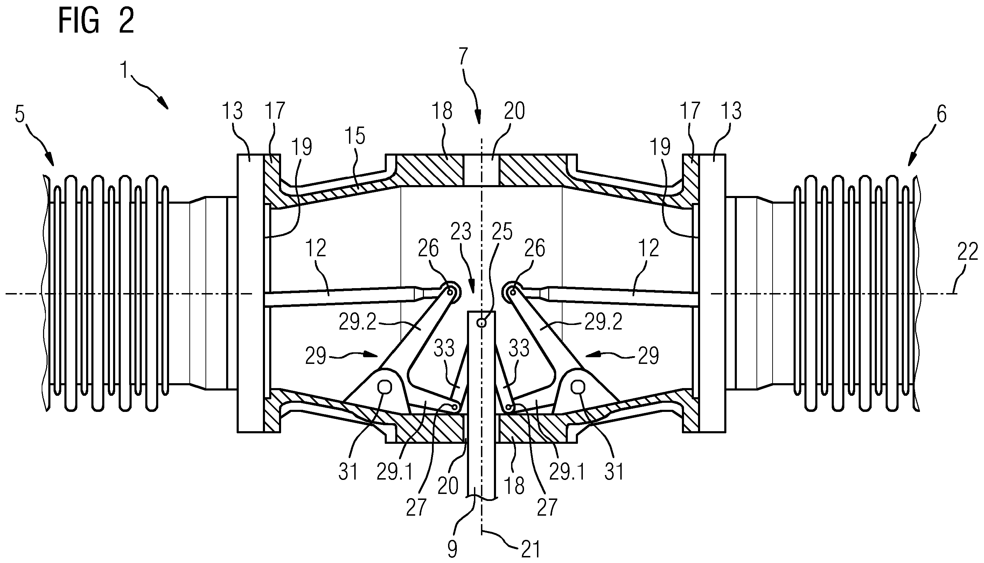

Jede Schalteinheit 5, 6 weist ein Isoliergehäuse 11 und eine in dem Isoliergehäuse 11 angeordnete (in den Figuren nicht dargestellte) Schaltkammer auf, in der eine bewegbare Schaltstange 12 zum Öffnen und Schließen eines Strompfades der Schalteinheit 11 angeordnet ist (siehe dazu die Figuren 2 bis 4). Die Strompfade der beiden Schalteinheiten 5, 6 sind elektrisch in Reihe geschaltet und bilden dadurch einen Strompfad der Doppelschalteinheit 1. Ferner weist jede Schalteinheit 5, 6 getriebeeinheitsseitig einen Schalteinheitsflansch 13 auf.

Jedes Isoliergehäuse 11 ist röhrenartig ausgebildet, weist an seiner Außenseite ringförmig um die Längsachse 3 verlaufende Isolierschirme auf und ist aus einem elektrisch isolierenden Material, beispielsweise aus einem Porzellan oder einem Verbundwerkstoff, gefertigt.

Die Getriebeeinheit 7 weist ein Getriebegehäuse 15 auf. Das Getriebegehäuse 15 weist zwei sich gegenüberliegende erste Getriebegehäuseflansche 17 und zwei sich gegenüberliegende zweite Getriebegehäuseflansche 18 auf. Jeder erste Getriebegehäuseflansch 17 ist mit dem Schalteinheitsflansch 13 einer Schalteinheit 5, 6 verbunden. Jeder erste Getriebegehäuseflansch 17 umgibt eine erste Gehäuseöffnung 19 des Getriebegehäuses 15, durch die eine Schaltstange 12 aus einer Schalteinheit 5 in das Getriebegehäuse 15 hineinragt. Jeder zweite Getriebegehäuseflansch 18 umgibt eine zweite Gehäuseöffnung 20 des Getriebegehäuses 15. Die Antriebsstange 9 ragt durch eine zweite Gehäuseöffnung 20 in das Getriebegehäuse 15 hinein.

Figur 2 zeigt eine Doppelschaltvorrichtung 1 im Bereich der Getriebeeinheit 7, wobei das Getriebegehäuse 15 geschnitten dargestellt ist.

Die beiden ersten Gehäuseöffnungen 19 sind zueinander spiegelsymmetrisch bezüglich einer ersten Mittelebene 21 angeordnet. Die zweiten Gehäuseöffnungen 20 sind zueinander spiegelsymmetrisch bezüglich einer zu der ersten Mittelebene 21 orthogonalen zweiten Mittelebene 22 angeordnet. Jede erste Gehäuseöffnung 19 ist spiegelsymmetrisch bezüglich der zweiten Mittelebene 22. Die beiden ersten Getriebegehäuseflansche 17 sind zueinander spiegelsymmetrisch bezüglich der ersten Mittelebene 21 ausgebildet und jeder erste Getriebegehäuseflansch 17 ist spiegelsymmetrisch bezüglich der zweiten Mittelebene 22 ausgebildet. Die beiden zweiten Getriebegehäuseflansche 18 sind zueinander spiegelsymmetrisch bezüglich der zweiten Mittelebene 22 ausgebildet und jeder zweite Getriebegehäuseflansch 18 ist spiegelsymmetrisch bezüglich der ersten Mittelebene 21 ausgebildet.

Durch jede erste Gehäuseöffnung 19 ragt eine Schaltstange 12 aus einer Schalteinheit 5, 6 in das Getriebegehäuse 15 hinein. Die Antriebsstange 9 ragt durch eine der zwei sich gegenüberliegenden zweiten Gehäuseöffnungen 20 in das Getriebegehäuse 15 hinein. Eine Längsachse der Antriebsstange 9 verläuft orthogonal zu der zweiten Mittelebene 22 in der ersten Mittelebene 21.

In dem Getriebegehäuse 15 ist eine Umlenkanordnung 23 angeordnet, die die Schaltstangen 12 an die Antriebsstange 9 koppelt und Bewegungen der Antriebsstange 9 entlang deren Längsachse in dazu im Wesentlichen orthogonale Bewegungen der Schaltstangen 12 übersetzt.

Die Umlenkanordnung 23 weist ein erstes Koppelgelenk 25 auf, durch das sie an die Antriebsstange 9 gekoppelt ist. Ferner weist die Umlenkanordnung 23 zwei zweite Koppelgelenke 26 auf, durch die sie jeweils an eine Schaltstange 12 gekoppelt ist.

Des Weiteren weist die Umlenkanordnung 23 zwei Winkelhebel 29 auf, die jeweils um eine Drehachse 31 drehbar an dem Getriebegehäuse 15 gelagert und zueinander spiegelsymmetrisch bezüglich der ersten Mittelebene 21 ausgebildet sind. Jeder Winkelhebel 29 weist einen ersten Hebelarm 29.1 auf, der über ein drittes Koppelgelenk 27 an ein mit dem ersten Koppelgelenk 25 verbundenes Verbindungselement 33 gekoppelt ist. Ferner weist jeder Winkelhebel 29 einen zweiten Hebelarm 29.2 auf, an dem ein zweites Koppelgelenk 26 angeordnet ist, über das der zweite Hebelarm 29.2 mit einer Schaltstange 12 verbunden ist.

Das erste Koppelgelenk 25 ist in der ersten Mittelebene 21 orthogonal zu der zweiten Mittelebene 22 zwischen zwei Endlagen, die gleich weit von der zweiten Mittelebene 22 entfernt sind, bewegbar.

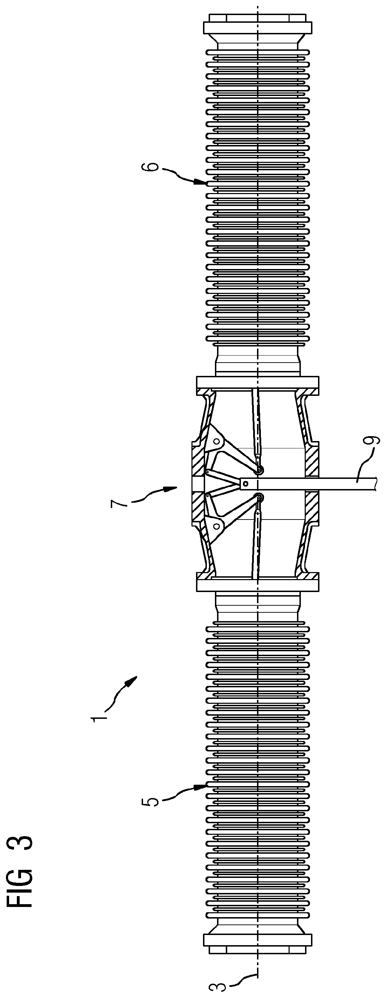

Figur 3 zeigt eine alternative Doppelschaltvorrichtung 1, wobei wiederum das Getriebegehäuse 15 der Getriebeeinheit 7 geschnitten dargestellt ist. Diese Doppelschaltvorrichtung 1 unterscheidet sich von dem in Figur 2 gezeigten Doppelschaltvorrichtung 1 nur dadurch, dass die Getriebeeinheit 7 um 180 Grad um die Längsachse 3 der Doppelschaltvorrichtung 1 gedreht zwischen den Schalteinheiten 5, 6 angeordnet ist und die Antriebsstange 9 durch eine andere erste Gehäuseöffnung 20 in das Getriebegehäuse 15 hineinragt. Dies ist möglich aufgrund der bezüglich der ersten Mittelebene 21 zueinander spiegelsymmetrischen Anordnung der ersten Getriebegehäuseflansche 17 und deren jeweils bezüglich der zweiten Mittelebene 22 spiegelsymmetrischen Ausbildung sowie der bezüglich der zweiten Mittelebene 22 zueinander spiegelsymmetrischen Anordnung der zweiten Getriebegehäuseflansche 18.

Durch die Drehung der Getriebeeinheit 7 in dem in Figur 3 gezeigten Doppelschaltvorrichtung 1 gegenüber der in Figur 2 gezeigten Doppelschaltvorrichtung 1, verursachen gleiche Bewegungen der Antriebsstange 9 einander entgegengesetzte Schaltbewegungen der einzelnen Schaltstangen 12. Beispielsweise wird der Strompfad bei dem in Figur 3 gezeigten Doppelschaltvorrichtung 1 durch eine nach unten gerichtete Zugbewegung der Antriebsstange 9 geschlossen, wohingegen diese Zugbewegung bei der in Figur 2 gezeigten Doppelschaltvorrichtung 1 den Strompfad öffnet. Entsprechend wird der Strompfad bei der in Figur 3 gezeigten Doppelschaltvorrichtung 1 durch eine nach oben gerichtete Schubbewegung der Antriebsstange 9 geöffnet, wohingegen diese Schubbewegung bei der in Figur 2 gezeigten Doppelschaltvorrichtung 1 den Strompfad schließt. Da die Zugbewegung der Antriebsstange 9 aufgrund deren Elastizitätseigenschaften mit höherer Geschwindigkeit durchgeführt werden kann als die Schubbewegung, kann bei der in Figur 3 gezeigten Doppelschaltvorrichtung 1 gegenüber der in Figur 2 gezeigten Doppelschaltvorrichtung 1 eine höhere Einschaltgeschwindigkeit der Doppelschaltvorrichtung 1 erreicht werden.

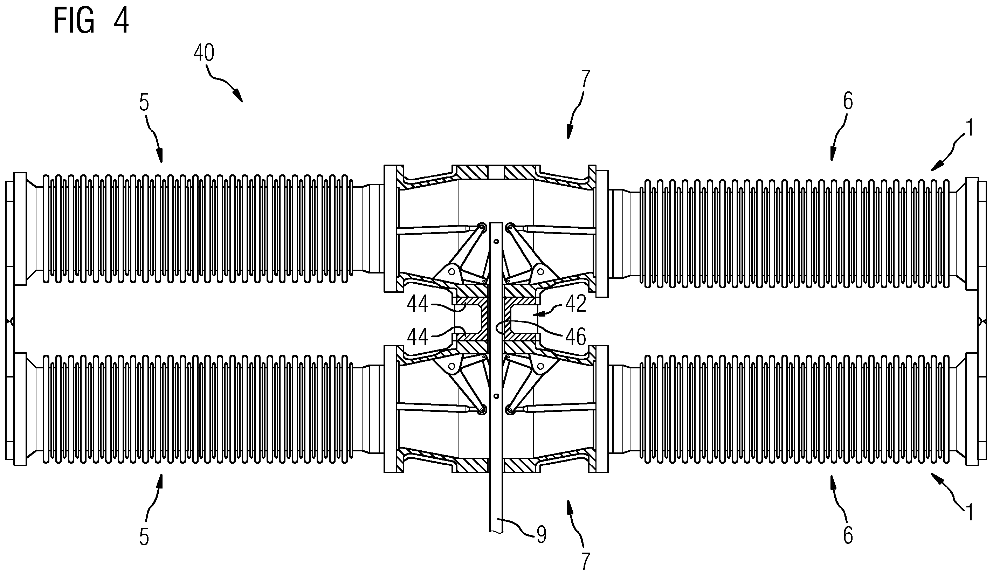

Figur 4 zeigt ein erstes Ausführungsbeispiel einer erfindungsgemäßen Schaltvorrichtung 40 mit zwei Doppelschaltvorrichtungen 1. Jede Doppelschaltvorrichtung 1 ist analog zu einer der in den Figuren 2 und 3 gezeigten Doppelschaltvorrichtungen 1 ausgebildet. Die Getriebeeinheit 7 einer der beiden Doppelschaltvorrichtungen 1 ist gegenüber der Getriebeeinheit 7 der anderen Doppelschaltvorrichtung 1 um 180 Grad um die Längsachse 3 der Doppelschaltvorrichtung 1 gedreht. Die Getriebegehäuse 15 der beiden Getriebeeinheiten 7 sind wiederum geschnitten dargestellt. Die Doppelschaltvorrichtungen 1 weisen eine gemeinsame Antriebsstange 9 auf, die durch die ersten Koppelgelenke 25 an die Umlenkanordnungen 23 der Getriebeeinheiten 7 beider Doppelschaltvorrichtungen 1 gekoppelt ist. Die Getriebeeinheiten 7 sind durch ein Verbindungsflanschelement 42 miteinander verbunden, das zwei Verbindungsflansche 44 und eine Verbindungsflanschöffnung 46 aufweist. Jeder Verbindungsflansch 44 ist mit einem zweiten Getriebegehäuseflansch 18 einer der beiden Getriebeeinheiten 7 verbunden. Die Antriebsstange 9 ist durch das Getriebegehäuse 15 einer der beiden Doppelschaltvorrichtungen 1 und die Verbindungsflanschöffnung 46 des Verbindungsflanschelements 42 in das Getriebegehäuse 15 der anderen Doppelschaltvorrichtung 1 geführt. Die ersten Mittelebenen 21 der Getriebeeinheiten 7 der beiden Doppelschaltvorrichtungen 1 fallen zusammen, die zweiten Mittelebenen 22 sind parallel zueinander. Die beiden Doppelschaltvorrichtungen 1 unterscheiden sich voneinander durch die Ausgestaltungen und Funktionen ihrer Schalteinheiten 5, 6. Beispielsweise ist eine der beiden Doppelschaltvorrichtungen 1 als ein Leistungsschalter ausgebildet, dessen Schalteinheiten 5, 6 jeweils eine Löschvorrichtung zum Löschen eines Lichtbogens aufweisen, und die Schalteinheiten 5, 6 der anderen Doppelschaltvorrichtung 1 weisen keine derartigen Löschvorrichtungen und jeweils einen Einschaltwiderstand auf.

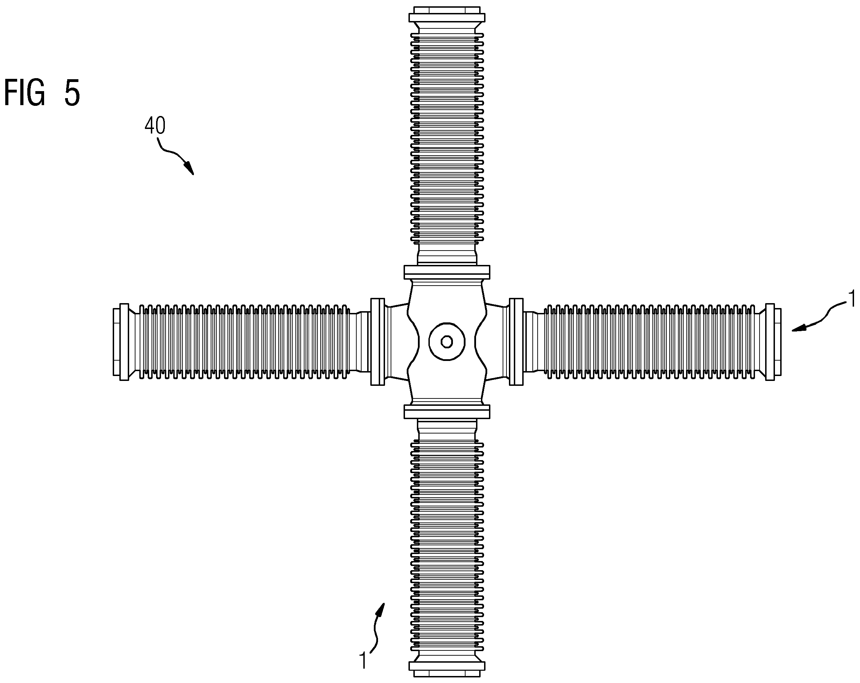

Figur 5 zeigt ein zweites, alternatives Ausführungsbeispiel einer Schaltvorrichtung 40 mit zwei Doppelschaltvorrichtungen 1. Dieses Ausführungsbeispiel unterscheidet sich von dem in Figur 4 gezeigten Ausführungsbeispiel dadurch, dass die Längsachsen 3 der beiden Doppelschaltvorrichtungen 1 um 90 Grad gegeneinander verdreht sind. Die ersten Mittelebenen 21 der Getriebeeinheiten 7 der beiden Doppelschaltvorrichtungen 1 sind orthogonal zueinander, die zweiten Mittelebenen 22 der Getriebeeinheiten 7 der beiden Doppelschaltvorrichtungen 1 sind parallel zueinander.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, der durch die nachfolgenden Ansprüche definiert wird, zu verlassen.

## Patentansprüche

1. Schaltvorrichtung (40) mit mehreren Doppelschaltvorrichtungen (1), welche umfassen
- zwei sich entlang einer Längsachse (3) der Doppelschaltvorrichtung (1) erstreckende Schalteinheiten (5, 6), die zum Öffnen und Schließen eines Strompfades jeweils eine Schaltstange (12) aufweisen,
- eine zwischen den beiden Schalteinheiten (5, 6) angeordnete Getriebeeinheit (7), die Getriebeeinheit (7) umfassend ein Getriebegehäuse (15) mit zwei sich gegenüberliegenden ersten Gehäuseöffnungen (19), die zueinander spiegelsymmetrisch bezüglich einer ersten Mittelebene (21) angeordnet sind, und zwei sich gegenüberliegenden zweiten Gehäuseöffnungen (20), die zueinander spiegelsymmetrisch bezüglich einer zu der ersten Mittelebene (21) orthogonalen zweiten Mittelebene (22) angeordnet sind, wobei jede erste Gehäuseöffnung (19) zur Einführung der jeweiligen Schaltstange (12) aus der Schalteinheit (5, 6) in das Getriebegehäuse (15) ausgebildet ist, und
- eine Antriebsstange (9), die sich orthogonal zu der zweiten Mittelebene (22) der Getriebeeinheit (7) durch eine der zwei sich gegenüberliegenden zweiten Gehäuseöffnungen (20) in das Getriebegehäuse (15) der Getriebeeinheit (7) erstreckt,
wobei die Getriebeeinheit (7) weiter umfasst:
- eine in dem Getriebegehäuse angeordnete Umlenkanordnung (23)zur Kopplung der Schaltstangen (12) an die Antriebsstange (9) mit einem ersten Koppelgelenk (25), durch das die Umlenkanordnung (23) an die Antriebsstange (9) gekoppelt ist, und zwei zweiten Koppelgelenken (26), durch die die Umlenkanordnung (23) jeweils an eine Schaltstange (12) gekoppelt ist, wobei das erste Koppelgelenk (25)in der ersten Mittelebene orthogonal zu der zweiten Mittelebene zwischen zwei Endlagen, die gleich weit von der zweiten Mittelebene entfernt sind, bewegbar ist,
und
wobei bei der Schaltvorrichtung (40) die zweiten Mittelebenen (22) aller Getriebeeinheiten (7) zueinander parallel sind und die Doppelschaltvorrichtungen (1) eine gemeinsame Antriebsstange (9) aufweisen, die durch die ersten Koppelgelenke (25) an die Umlenkanordnungen (23) der Getriebeeinheiten (7) aller Doppelschaltvorrichtungen (1) gekoppelt ist, **dadurch gekennzeichnet, dass** die Getriebeeinheiten (7) zweier Doppelschaltvorrichtungen (1) identisch ausgebildet sind und die Getriebeeinheit (7) einer dieser Doppelschaltvorrichtungen (1) gegenüber der Getriebeeinheit (7) der anderen Doppelschaltvorrichtung (1) um 180 Grad um die Längsachse (3) der einen Doppelschaltvorrichtung (1) gedreht zwischen den Schalteinheiten (5, 6) der anderen Doppelschaltvorrichtung (1) angeordnet ist und die gemeinsame Antriebsstange (9) durch eine der zwei sich gegenüberliegenden zweiten Gehäuseöffnungen (20) in das Getriebegehäuse (15)der Getriebeeinheit (7) einer dieser Doppelschaltvorrichtungen (7) hineinragt.

2. Schaltvorrichtung (40) nach Anspruch 1, wobei die ersten Mittelebenen (21) der Getriebeeinheiten (7) wenigstens zweier Doppelschaltvorrichtungen (1) zusammenfallen.

3. Schaltvorrichtung (40) nach Anspruch 1 oder 2, wobei die ersten Mittelebenen (21) der Getriebeeinheiten (7) wenigstens zweier Doppelschaltvorrichtungen (1) einander schneiden.

4. Schaltvorrichtung (40) nach Anspruch 3, wobei jede erste Gehäuseöffnung (19) einer Getriebeeinheit (7) spiegelsymmetrisch bezüglich der zweiten Mittelebene (22) ist.

5. Schaltvorrichtung (40) nach Anspruch 3 oder 4, wobei das Getriebegehäuse (15) zwei erste Getriebegehäuseflansche (17) aufweist, die jeweils eine erste Gehäuseöffnung (19) umgeben.

6. Schaltvorrichtung (40) nach Anspruch 5, wobei die beiden ersten Getriebegehäuseflansche (17) zueinander spiegelsymmetrisch bezüglich der ersten Mittelebene (21) ausgebildet sind.

7. Schaltvorrichtung (40) nach Anspruch 5 oder 6, wobei jeder erste Getriebegehäuseflansch (17) spiegelsymmetrisch bezüglich der zweiten Mittelebene (22) ausgebildet ist.

8. Schaltvorrichtung (40) nach einem der Ansprüche 3 bis 7, wobei jede zweite Gehäuseöffnung (20) spiegelsymmetrisch bezüglich der ersten Mittelebene (21) ist.

9. Schaltvorrichtung (40) nach einem der Ansprüche 3 bis 8, wobei das Getriebegehäuse (15) zwei zweite Getriebegehäuseflansche (18) aufweist, die jeweils eine zweite Gehäuseöffnung (20) umgeben.

10. Schaltvorrichtung (40) nach Anspruch 8, wobei die beiden zweiten Getriebegehäuseflansche (18) zueinander spiegelsymmetrisch bezüglich der zweiten Mittelebene (22) ausgebildet sind.

11. Schaltvorrichtung (40) nach Anspruch 9 oder 10, wobei jeder zweite Getriebegehäuseflansch (18) spiegelsymmetrisch bezüglich der ersten Mittelebene (21) ausgebildet ist.

12. Schaltvorrichtung (40) nach einem der Ansprüche 1 bis 11, wobei die Umlenkanordnung (23) zwei Winkelhebel (29) aufweist und jeder Winkelhebel (29) um eine Drehachse (31) drehbar an dem Getriebegehäuse (15) gelagert ist und einen ersten Hebelarm (29.1), der über ein drittes Koppelgelenk (27) an ein mit dem ersten Koppelgelenk (25) verbundenes Verbindungselement (33) gekoppelt ist, und einen zweiten Hebelarm (29.2), an dem ein zweites Koppelgelenk (26) angeordnet ist, aufweist.

## Claims

1. A shifting device (40) with multiple double shifting devices (1) comprising
- two shifting units (5, 6) extending along a longitudinal axis (3) of the double shifting device (1) and each having a shifting rod (12) for opening and closing a current path,
- a gear unit (7) arranged between the two shifting units (5, 6), the gear unit (7) comprising a gear housing (15) with two first housing openings (19) opposite each other which are arranged mirror-symmetrically to one another relative to a first central plane (21), and two second housing openings (20) opposite each other which are arranged mirror-symmetrically to one another relative to a second central plane (22) orthogonal to the first central plane (21), wherein each first housing opening (19) is configured for inserting the respective shifting rod (12) from the switching unit (5, 6) into the gear housing (15), and
- a driving rod (9) extending orthogonally to the second central plane (22) of the gear unit (7) through one of the two second housing openings (20) opposite each other into the gear housing (15) of the gear unit (7), the gear unit (7) further comprising:
- a relinker arrangement (23) arranged in the gear housing for coupling the shifting rods (12) to the driving rod (9) using a first coupling joint (25), by means of which the relinker arrangement (23) is coupled to the driving rod (9), and two second coupling joints (26), each coupling the relinker arrangement (23) to a shifting rod (12), wherein the first coupling joint (25) is movable in the first central plane orthogonally to the second central plane between two end positions which are at the same distance from the second central plane, and wherein, in the shifting device (40), the second central planes (22) of all gear units (7) are parallel to one another, and the double shifting devices (1) have a common driving rod (9) coupled to the relinker arrangements (23) of the gear units (7) of all double shifting devices (1) by the first coupling joints (25), **characterized in that** the gear units (7) of two double shifting devices (1) are configured identically, and the gear unit (7) of one of these double shifting devices (1) is arranged opposite the gear unit (7) of the other double shifting device (1) between the shifting units (5, 6) of the other double shifting device (1), rotated by 180 degrees about the longitudinal axis (3) of the one double shifting device (1), and the common driving rod (9) projects through one of the two second housing openings (20) opposite each other into the gear housing (15) of the gear unit (7) of one of these double shifting devices (7).

2. The shifting device (40) according to claim 1, wherein the first central planes (21) of the gear units (7) of at least two double shifting devices (1) coincide.

3. The shifting device (40) according to claim 1 or 2, wherein the first central planes (21) of the gear units (7) of at least two double shifting devices (1) intersect one another.

4. The shifting device (40) according to claim 3, wherein each first housing opening (19) of a gear unit (7) is mirror-symmetrical relative to the second central plane (22).

5. The shifting device (40) according to claim 3 or 4, wherein the gear housing (15) has two first gear housing flanges (17), each surrounding a first housing opening (19).

6. The shifting device (40) according to claim 5, wherein the two first gear housing flanges (17) are configured mirror-symmetrically to one another relative to the first central plane (21).

7. The shifting device (40) according to claim 5 or 6, wherein each first gear housing flange (17) is configured mirror-symmetrically relative to the second central plane (22).

8. The switching device (40) according to any one of claims 3 to 7, wherein each second housing opening (20) is mirror-symmetrical relative to the first central plane (21).

9. The shifting device (40) according to any one of claims 3 to 8, wherein the gear housing (15) has two second gear housing flanges (18), each surrounding a second housing opening (20).

10. The switching device (40) according to claim 8, wherein the two second gear housing flanges (18) are configured mirror-symmetrically to one another relative to the second central plane (22).

11. The shifting device (40) according to claim 9 or 10, wherein each second gear housing flange (18) is configured mirror-symmetrically relative to the first central plane (21).

12. The switching device (40) according to any one of claims 1 to 11, wherein the relinker arrangement (23) has two angle levers (29), and each angle lever (29) is mounted to the gear housing (15) to be rotatable about an axis of rotation (31), and a first lever arm (29.1) coupled via a third coupling joint (27) to a connecting element (33) connected to the first coupling joint (25), and a second lever arm (29.2), on which a second coupling joint (26) is arranged.

## Revendications

1. Dispositif de commutation (40) comprenant plusieurs dispositifs de commutation doubles (1), lesquels comprennent :
- deux unités de commutation (5, 6) s'étendant le long d'un axe longitudinal (3) du dispositif de commutation double (1), lesquelles présentent chacune une tige de commutation (12) pour l'ouverture et la fermeture d'un chemin de courant,
- une unité de transmission (7) disposée entre les deux unités de commutation (5, 6), laquelle unité de transmission (7) comprend un carter de transmission (15) doté de deux premières ouvertures de carter (19) opposées, lesquelles sont disposées de manière symétrique l'une par rapport à l'autre par rapport à un premier plan médian (21), et de deux secondes ouvertures de carter (20) opposées, lesquelles sont disposées de manière symétrique l'une par rapport à l'autre par rapport à un second plan médian (22) orthogonal au premier plan médian (21), chaque première ouverture de carter (19) étant configurée pour l'introduction de la tige de commutation (12) respective depuis l'unité de commutation (5, 6) dans le carter de transmission (15), et
- une tige d'entraînement (9) qui s'étend orthogonalement au second plan médian (22) de l'unité de transmission (7) à travers l'une des deux secondes ouvertures de carter (20) opposées dans le carter de transmission (15) de l'unité de transmission (7), l'unité de transmission (7) comprenant en outre :
- un agencement de déviation (23) disposé dans le carter de transmission pour le couplage des tiges de commutation (12) à la tige d'entraînement (9), doté d'une première articulation de couplage (25) par laquelle l'agencement de déviation (23) est couplé à la tige d'entraînement (9), et de deux secondes articulations de couplage (26) par lesquelles l'agencement de déviation (23) est couplé respectivement à une tige de commutation (12), la première articulation de couplage (25) étant mobile dans le premier plan médian, orthogonalement au second plan médian, entre deux positions de fin de course qui sont à égale distance du second plan médian, et dans lequel, pour le dispositif de commutation (40), les seconds plans médians (22) de toutes les unités de transmission (7) sont parallèles entre eux et les dispositifs de commutation doubles (1) présentent une tige d'entraînement (9) commune qui est couplée aux agencements de déviation (23) des unités de transmission (7) de tous les dispositifs de commutation doubles (1) par les premières articulations de couplage (25), **caractérisé en ce que** les unités de transmission (7) de deux dispositifs de commutation doubles (1) sont configurées de manière identique et l'unité de transmission (7) de l'un de ces dispositifs de commutation doubles (1) est disposée entre les unités de commutation (5, 6) de l'autre dispositif de commutation double (1) en étant tournée de 180 degrés autour de l'axe longitudinal (3) dudit un dispositif de commutation double (1) par rapport à l'unité de transmission (7) de l'autre dispositif de commutation double (1), et la tige d'entraînement (9) commune fait saillie dans le carter de transmission (15) de l'unité de transmission (7) de l'un de ces dispositifs de commutation doubles (7) à travers l'une des deux secondes ouvertures de carter (20) opposées.

2. Dispositif de commutation (40) selon la revendication 1, dans lequel les premiers plans médians (21) des unités de transmission (7) d'au moins deux dispositifs de commutation doubles (1) coïncident.

3. Dispositif de commutation (40) selon la revendication 1 ou 2, dans lequel les premiers plans médians (21) des unités de transmission (7) d'au moins deux dispositifs de commutation doubles (1) se coupent.

4. Dispositif de commutation (40) selon la revendication 3, dans lequel chaque première ouverture de carter (19) d'une unité de transmission (7) est symétrique par rapport au second plan médian (22).

5. Dispositif de commutation (40) selon la revendication 3 ou 4, dans lequel le carter de transmission (15) présente deux premières brides de carter de transmission (17) qui entourent chacune une première ouverture de carter (19).

6. Dispositif de commutation (40) selon la revendication 5, dans lequel les deux premières brides de carter de transmission (17) sont configurées de manière symétrique l'une par rapport à l'autre par rapport au premier plan médian (21).

7. Dispositif de commutation (40) selon la revendication 5 ou 6, dans lequel chaque première bride de carter de transmission (17) est configurée de manière symétrique par rapport au second plan médian (22).

8. Dispositif de commutation (40) selon l'une des revendications 3 à 7, dans lequel chaque seconde ouverture de carter (20) est symétrique par rapport au premier plan médian (21).

9. Dispositif de commutation (40) selon l'une des revendications 3 à 8, dans lequel le carter de transmission (15) présente deux secondes brides de carter de transmission (18) qui entourent chacune une seconde ouverture de carter (20).

10. Dispositif de commutation (40) selon la revendication 8, dans lequel les deux secondes brides de carter de transmission (18) sont configurées de manière symétrique l'une par rapport à l'autre par rapport au second plan médian (22).

11. Dispositif de commutation (40) selon la revendication 9 ou 10, dans lequel chaque seconde bride de carter de transmission (18) est configurée de manière symétrique par rapport au premier plan médian (21).

12. Dispositif de commutation (40) selon l'une des revendications 1 à 11, dans lequel l'agencement de déviation (23) présente deux leviers coudés (29) et chaque levier coudé (29) est logé de manière rotative sur le carter de transmission (15) autour d'un axe de rotation (31) et présente un premier bras de levier (29.1) qui est couplé, via une troisième articulation de couplage (27), à un élément de liaison (33) relié à la première articulation de couplage (25), et un second bras de levier (29.2) sur lequel est disposée une deuxième articulation de couplage (26).
